(19) Europäisches Patentamt
European Patent Office
Office européen des brevets

(11) Veröffentlichungsnummer: **0 070 010**
**B1**

(12) **EUROPÄISCHE PATENTSCHRIFT**

(45) Veröffentlichungstag der Patentschrift: **22.07.87**

(51) Int. Cl.⁴: **C 08 L 81/00,** C 08 L 81/02, C 08 L 81/06, C 08 G 75/02

(21) Anmeldenummer: **82106168.6**

(22) Anmeldetag: **09.07.82**

(54) **Stabilisierung von Polyphenylensulfid und Polysulfonen gegen korrosive Ausgasungen.**

(30) Priorität: **10.07.81 DE 3127355**
**16.03.82 DE 3209525**

(43) Veröffentlichungstag der Anmeldung:
**19.01.83 Patentblatt 83/3**

(45) Bekanntmachung des Hinweises auf die Patenterteilung:
**22.07.87 Patentblatt 87/30**

(84) Benannte Vertragsstaaten:
**AT BE CH FR GB IT LI LU NL**

(56) Entgegenhaltungen:
**EP-A-0 017 062**
**EP-A-0 053 344**
**EP-A-0 062 830**
**FR-A-2 102 796**
**GB-A-1 068 952**
**US-A-3 729 527**
**US-A-4 115 344**

(73) Patentinhaber: **Siemens Aktiengesellschaft Berlin und München, Wittelsbacherplatz 2, D-8000 München 2 (DE)**

(72) Erfinder: **Quella, Ferdinand, Dr., Dipl.- Ing., Parkstrasse 9, D-8035 Gauting (DE)**
Erfinder: **Schmidt, Hans- Friedrich, Dr., Dipl.- Ing., Graf Tattenbachweg 3, D-8196 Eurasburg (DE)**

**EP 0 070 010 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft ein Verfahren zur Reduzierung schwefelhaltiger Ausgasungen in Polyphenylensulfid.

Polyphenylensulfid (PPS) verschiedener Anbieter wird mit Lithiumcarbonat bis ca. 5 % Massenanteil versetzt, um eine Absorption schwefelhaltiger Ausgasungen zu erreichen. Diese Ausgasungen wirken noch bis weit unter 200°C - also bis in den Einsatztemperaturbereich von PPS- korrosiv (F. Quella, Kunststoffe 71 (1981) Heft 6, Seite 389) gegenüber Metallen. Die Gase bestehen unter anderem aus $H_2S$, $SO_2$ und Thiophenol. Das zugesetzte Lithiumcarbonat absorbiert diese Gase erst oberhalb des Verarbeitungstemperaturbereiches von maximal 370°C.

Aus der EP-A-62 830 ist das Mischen von Polyphenylensulfid mit einem Polyphenylketon zum Verändern der mechanischen Eigenschaften bekannt, nicht aber die Verwendung zur Reduzierung von schwefelhaltigen Ausgasungen. Aufgrund dessen bewegt sich der Zusatzbereich auch nur vorzugsweise im Bereich von 10 - 90 % Massenanteil.

Der EP-A-53 344 liegt ein Verfahren zur Herstellung von stabilisierten Polyphenylensulfiden zugrunde. Dabei werden verschieden stabilisierend wirkende Gruppen in Polyphenylensulfide chemisch eingebaut.

Die EP-A-17 062 bezieht sich auf die Herstellung von isolierten Wickeldrähten aus Kupfer im Extrusionsverfahren. Als Material werden amorphe Polyethersulfone verwendet. Zur Erzielung besonderer Effekte können auch hoch- oder nicht schmelzende Polymere, wie zum Beispiel Polytetrafluorethylen oder Polyimide, als Füllstoffe zugesetzt werden.

Aus der US-A-37 29 527 ist es bekannt, aromatische Polysulfone verschiedenen Polyamiden zuzusetzen. Die Verwendung liegt in der Verbesserung mechanischer Eigenschaften, wobei hier vorzugsweise 5 bis 40 % Polyamide zugesetzt werden.

Der Erfindung liegt die Aufgabe zugrunde, ein Verfahren der eingangs definierten Form zu konzipieren. Ein geeigneter Absorber für die schwefelhaltigen Gase muß folgende Forderungen erfüllen:

- er muß thermisch etwa genauso stabil sein wie PPS,
- er muß in etwa in demselben Temperaturbereich verarbeitbar sein,
- er muß Akzeptorgruppen für die schwefelhaltigen Gase besitzen,
- er muß sich mit PPS gut mischen und
- der Zusatz muß noch wirtschaftlich sein.

Diese Aufgabe wird durch die Merkmale der Patentansprüche gelöst. Dieses Polymer bindet die sauren Gase, so daß die schwefelhaltigen Ausgasungen absorbiert werden können. Die Erprobung verschiedener Polymere, die im Temperaturbereich von PPS verarbeitet werden, ergab, daß Polymere mit Akzeptorgruppen, die im Bereich tiefer Temperaturen wirken, wie Amine oder Ketone, überraschend auch bei hohen Temperaturen wirksam sind.

Ein entsprechend geeignetes Polymer ist Polyvinylcarbazol (Handelsname Luvikan S). Aufgrund seines derzeit hohen Preises erscheint ein Zumischen bis ca. 1 % Massenanteil wirtschaftlich.

In der Prüfen bei 200°C der korrosiven Ausgasungen gegenüber Kupfer-Metalloberflächen nach Cu-Spiegel-Test der Firma Bell zeigt ein mit 1 % Massenanteil Polyvinylcarbazol gefülltes PPS wesentlich weniger schwefelhaltige Ausgasungen als ein gleiches nur mit 1 % Lithiumcarbonat ausgerüstetes PPS. Derselbe Effekt wurde bei galvanisch mit Silber beschichteten Messingblechen beobachtet (Lagerung im abgeschlossenen Volumen). Bei Lagerung über eine Woche und bei höherer Konzentration an Polyvinylcarbazol als 1 % treten allerdings Abbauprodukte dieses Polymeren in Erscheinung. Die zuzumischende Polyvinylcarbazol-Menge richtet sich jedoch auch nach dem herzustellenden Bauteil. Es kann z. B. sein, daß bei sehr empfindlichen Kontakten, die überhaupt keine schwefelhaltigen Gase vertragen, was zu prüfen wäre, eine Konzentration von z. B. 10 % Luvikan sinnvoll ist. Die dann zu wählende obere Einsatztemperatur müßte dann allerdings niedriger, z. B. 100°C, liegen.

Keine Abbauprodukte wurden beim Zumischen eines Polyimids (z. B. Handelsname: Torlon) gefunden. Die versilberten Bleche waren nach einer Woche bei 200°C noch völlig blank. Entsprechende Ergebnisse lieferten auch Versuche mit Polyamiden (z. B. PA 66).

Ähnliche Ergebnisse sind auch von anderen stickstoffhaltigen Polymeren mit Stickstoffgruppen und ähnlicher thermischer Stabilität wie PPS, z. B. von Polyvinylpyridin, zu erwarten.

Ein anderer Werkstofftyp, der erprobt wurde, war ein Keton. Hier war zunächst ein Absorptionsmechanismus ähnlich der bei Aldehyden bekannten Bisulfit-Additions-Reaktion vermutet. Als Absorber vergleichbarer Qualität, wie das obengenannte Polyimid, bewährte sich ein Polyetherether Keton (PEEK, Poly-1,4-oxyphenyloxy-p,p'-benzophenon). Auch hier ist ein Zumischen von 1 % Massenanteil wirtschaftlich. Ein Zusatz von 0,1 % ergab allerdings bereits eine über eine Woche bei 200°C ausreichende Wirkung.

Eine entsprechende Wirkung ist auch für andere polymere Ketone mit ähnlicher thermischer Stabilität zu erwarten.

Bekanntermaßen sind Donator-Akzeptor-Komplexe, wie im Falle des Polyvinylcarbazols oder Additionsverbindungen, wie bei dem Polyetheretherketon, thermisch nicht sehr stabil. Es muß daher noch ein anderer Wirkungsmechanismus vorliegen, der zu einer Stabilisierung des thermischen Abbaues von Polyphenylsensulfid führt. Vermutlich kommt es bei den genannten Polymeren zu einer Ausbildung von stabilen Radikalen, wobei die Weiterreaktion der thermisch gebildeten Schwefelradikale verhindert wird.

Möglicherweise findet thermisch eine Kettenspaltung statt: (z. B. A. B. Port, R. H. Still, IUPAC 26th Symposium on Macromolecules 1979, Vol. 1, p. 645 - 648)

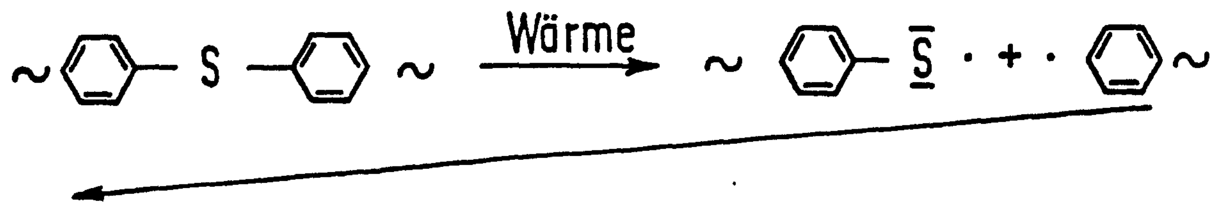


Angriff benachbarter Ketten, Vernetzung, beschleunigter Abbau, Abspaltung schwefelhaltiger Gase.
Die Stabilisierung kann z. B. so erfolgen:

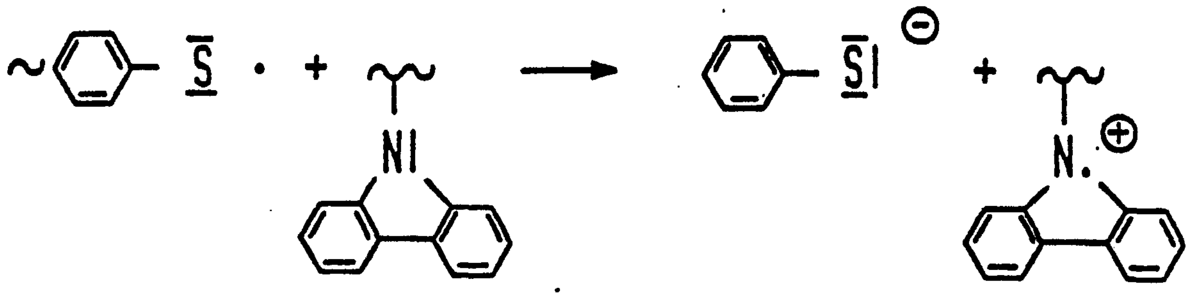

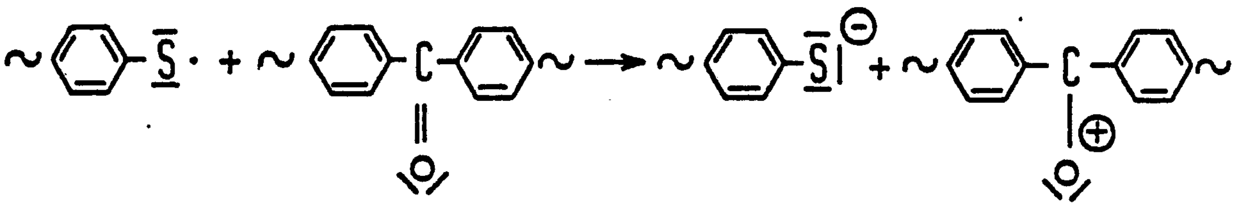

Alle Reaktionsprodukte können den Abbau nicht mehr beschleunigen.
Da der thermische Abbau bei Polysulfonen ähnlich dem von Polyphenylensulfid verläuft, ist eine gleichartige Wirkug der genannten Zusatzpolymeren zu erwarten.

**Ausführungsbeispiel 1:**

Polyphenylsulfid (Ryton R4) in Granulatform wird mit pulverisierten Zusätzen folgender Polymere vermischt und bei 200° C unter strömender Luft abgebaut:

| Stabilisator: | zugesetzte Menge (% Massenanteil) | Ausgasungsmenge: im Vergleich zu Ryton R4 = 1 |
|---|---|---|
| Polyetheretherketon | 2 | 0,25 |
| Polyvinylcarbazol | 0.1 | 0.25 |
| | 1 | 2.75 |
| Polybutylen- | 0.1 | 0.40 |
| terephthalat | 0.5 | 1.40 |
| Polyimid (Torlon 4203) | 1 | 0.25 |

Die Ergebnisse wurden durch Lagerversuche (25 g Normkleinstäbe, 5 Tage bei 200° C im abgeschlossenen Volumen) gegenüber galvanisch abgeschiedenen Silberoberflächen untermauert. Im Gegensatz zu Ryton R4 verursachten die Proben mit geringen Ausgasungen auch keinen oder nur sehr geringen Anlauf auf den Oberflächen.

Beim Abbau bei 330° C unter synthetischer Luft zeigten Polyetheretherketon und Polyimid gegenüber Ryton R4 noch beträchtliche Reduzierungen der schwefelhaltigen Gase.

**Ausführungsbeispiel 2:**

PPS-Granulat (Ryton BR-06) wird mit pulverisiertem PA 66 innig vermischt, durch Spritzgießen verarbeitet und die Ausgasungen bei 330° C gemessen.

Ergebnisse:

| | Zusatzmenge | Ausgasungsmenge (rel. Einheiten) |
|---|---|---|
| Ryton BR-06 | 0 % | 1 |
| + Luvican | 0.5 % | 0.8 |
| + PA 66 | 3 % | 0.5 |

**Ausführungsbeispiel 3:**

Die Menge an Ausgasungen aus Polysulfon wurde in Gegenwart folgender Zusätze gemessen (PSU ohne Zusatz = 1, bei 170° C, Luft, Schwefeldetektor)

| | Ausgasungsmenge: (rel. Einheiten) |
|---|---|
| Polyetheretherketon (1 %) | 0,5 |
| Polyimid (0,5 %) | 1,2 |

Die Wirksamheit eines Stabilisators hängt davon ab, daß er die reaktiven Zentren genügend schnell erreichen kann. Bei einem polymeren Zusatz muß das zugesetzte Polymer entweder eine genügend hohe Kettenbeweglichkeit besitzen, um rechtzeitig in den Abbauprozess einzugreifen, oder es muß in Art eines Komplexes an die PPS-Kette angelagert sein. Der erste Fall ist durch die Natur des Zusatzpolymeren bedingt, der zweite erfolgt bei der Aufschmelzung während des Spritzgießens.

Ein beiden Fällen gerecht werdender Effekt ist zu erziel en durch Einbau geeigneter Grundbausteine in Form eines Copolymeren in die PPS-Kette. Da PPS durch Kondensation hergestellt wird, bietet es sich an, die geeigneten Gruppen durch eine Cokondensation einzuführen. Bei einer Herstellung von PPS nach folgendem Mechanismus:

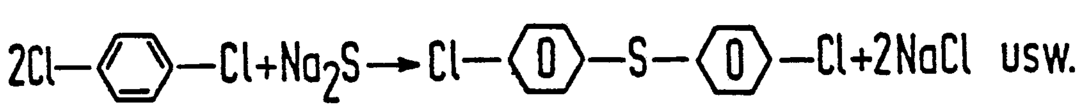

müßten neben dem Dichlorbenzol und $Na_2S$ noch entsprechende Comonomere zugesetzt werden:
z. B.

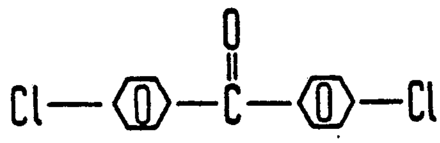

entsprechend dem Polyetheretherketon PEEK

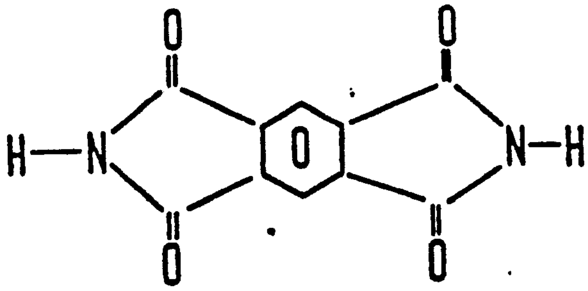

entsprechend den Bestandteilen eines Polyimides wie Torlon.

Die Einführng anderer Gruppen, wie die des Polyvinylcarbazols, ist allerdings schwierig, da Polyvinylcarbazol radikalisch polymerisiert wird.

Im Rahmen der Erfindung ist es möglich, auch Polymere über Oligomere (sogenannte Telechele) einzuführen, die an ihren Enden reaktive Gruppen tragen. Da PPS im ersten Herstellungsschritt sehr niedermolekular hergestellt wird und erst durch einen zweiten "Röstprozeß" bei 150... 200°C zu einem hochmolekularen Produkt verarbeitet wird, kann man nach dem ersten Schritt ein oligomeres oder niedermolekulares Produkt mit obengenannten Gruppen einführen, eventuell unter erneuter Zugabe von $Na_2S$, z. B.

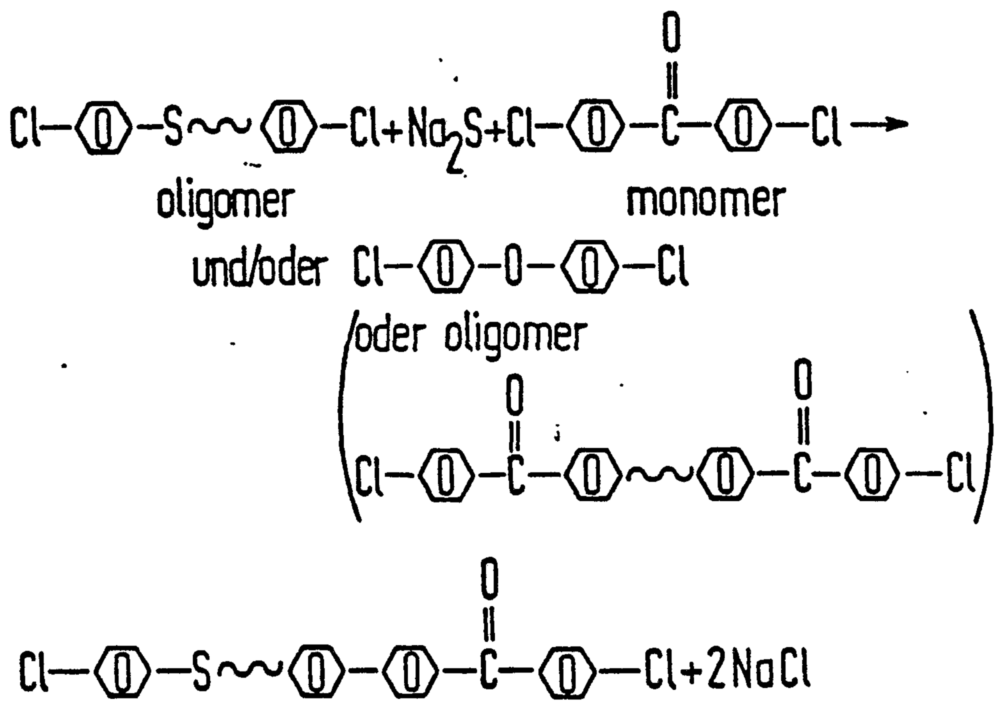


Die cokondensierten Mengen müßten in gleichem Mengenbereich wie die Stabilisatorpolymere zugesetzt werden (0.1... ca. 5 % Massenanteil), um die mechanischen Eigenschaften von PPS nicht zu verändern.

Die für die Cokondensationsreaktionen ausgewählten funktionellen Stabilisatorgruppen sind auch in niedermolekularen Stoffen vorhanden. Probleme bei niedermolekularen Zusätzen ergeben sich dann, wenn ihr Siedepunkt zu niedrig ist - sie dampfen dann bei der Verarbeitung aus oder setzen sich an der Oberfläche der Teile als Beläge ab: wenn die Auswanderungsgeschwindigkeit groß ist (bei niedermolekularen Stoffen ist die Gefahr von Ausblühungen gegeben); oder wenn sie mit Wasser ausgewaschen werden können (was bei Feuchtelagerung der Fall ist).

Geeignete niedermolekulare Substanzen mit Siedepunkten von über 300°C, die allerdings vergleichsweise hohe Molmassen besitzen müssen, werden im Folgenden beschrieben als Vertreter entsprechender Stoffklassen:

Carbazol Siedepunkt 354... 355°C entsprechend Polyvinylcarbazol
wasserunlöslich (Luvican)

Naphthalsäureamid Schmelzpunkt 307... 308°C entsprechend Polyimid (Torlon)

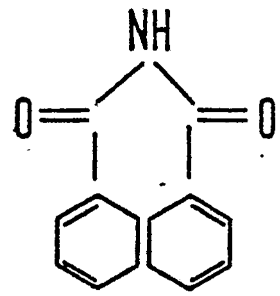

Methoxybenzophenon Siedepunkt 354... 355° C entsprechend PEEK

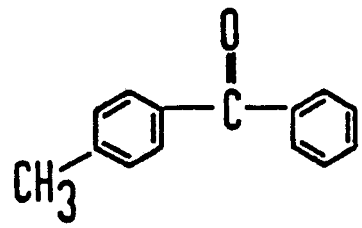

bzw. substituierte Diphenylether Kyaphenin
(Triazinderivat)

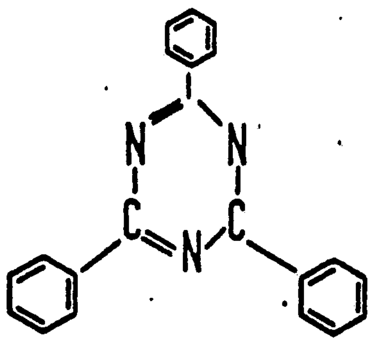

Siedepunkt 350° C, Schmelzpunkt 231° C

Diese hochkonjugierten Substanzen werden als Vertreter von hochkonjugierten Aminen (Carbazol), Ketonen (Methoxybenzophenon), Imiden (Naphthalsäureimid) und Triazinderivaten (Kyaphenin) verstanden. Aufgrund ihres analogen Aufbaues wie bei den Polymeren ist eine diesen entsprechende Wirkung zu erwarten. Eine Wirkungsreduzierung kann allerdings durch Oxidation eintreten, z. B. bei Carbazol und Naphtalsäureimid über die NH-Gruppe bei Verarbeitung. Insofern wären am Stickstoff dreifach substituierte Vertreter dieser Stoffklasse den N-H-Verbindungen vorzuziehen. Die Ketone und Triazinderivate besitzen diese Nachteile nicht. Bei Triazinderivaten ist kein entsprechendes technisch genutztes Polymer bekannt.

Die größere Beweglichkeit der niedermolekularen Stoffe favorisiert sie bei niedrigen Einsatztemperaturen, z. B. unter 200° C. Die größere Migrationsfähigkeit (Ausblühungen) und mögliche Ausdampfungen in hohen Verarbeitungstemperaturbereich, z. B. 370° C, macht sie den Polymeren-Zusätzen unter Umständen unterlegen.

Prinzipiell geeignet wären substituierte (sterisch gehinderte) Phenole, z. B. auch Phenolharze, jedoch reicht deren thermische Stabilität nicht aus. Ähnliches gilt für andere Radikalfänger.

**Patentansprüche**

für die Vertragsstaaten AT, BE, CH, IT, LI, LU, NL.

1. Verfahren zur Reduzierung schwefelhaltiger Ausgasungen in Polyphenylensulfid, dadurch gekennzeichnet, daß diesem Polymer ein thermisch etwa gleich stabiles Polymer mit aminischen Gruppen zugesetzt wird.

2. Verfahren zur Reduzierung schwefelhaltiger Ausgasungen nach Anspruch 1, dadurch gekennzeichnet, daß dieses Polymer ein aromatisches Amin, insbesondere Polyvinylcarbazol, in einer Konzentration bis ca. 5 %, vorzugsweise bis ca. 1 %, Massenanteil ist.

3. Verfahren zur Reduzierung schwefelhaltiger Ausgasungen nach Anspruch 1, dadurch gekennzeichnet, daß dieses Polymer ein Polyimid in einer Konzentration bis ca. 5 %, vorzugsweise ca. 1 %, Massenanteil ist.

4. Verfahren zur Reduzierung schwefelhaltiger Ausgasungen nach Anspruch 1, dadurch gekennzeichnet, daß dieses Polymer ein Polyamid (zum Beispiel Polyamid 6.6) in einer Konzentration bis ca. 5 %, vorzugsweise bis ca. 1 %, Massenanteil ist.

5. Verfahren zur Reduzierung schwefelhaltiger Ausgasungen in Polyphenylensulfid, dadurch gekennzeichnet, daß diesem Polymer ein thermisch etwa gleich stabiles Polymer mit Keto-Gruppen in einer Konzentration von weniger als 2 % Massenanteil zugesetzt wird.

6. Verfahren zur Reduzierung schwefelhaltiger Ausgasungen nach Anspruch 5, dadurch gekennzeichnet, daß dieses Polymer ein aromatisches Keton, insbesondere ein Polyetheretherketon (Poly-1,4-oxyphenyloxy-p,p'-benzophenon) in einer Konzentration von weniger als 2 % Massenanteil ist.

7. Verfahren zur Reduzierung schwefelhaltiger Ausgasungen in Polysulfonen, dadurch gekennzeichnet, daß den Polysulfonen ein Polymer entsprechend den Ansprüchen 3 und 4 in einer Konzentration bis ca. 1 % Massenanteil zugesetzt wird.

8. Verfahren zur Reduzierung schwefelhaltiger Ausgasungen in Polyphenylensulfid nach den Ansprüchen 1 bis 6, dadurch gekennzeichnet, daß kondensationsfähige, resonanzfähige aromatische Ketone, Amine, Imide in Form von reaktiven Monomeren in einer Konzentration bis ca. 5 %, vorzugsweise bis ca. 1 %, Massenanteil, insbesondere während des Herstellungsprozesses von PPS den Ausgangsstoffen zugemischt werden.

9. Verfahren zur Reduzierung schwefelhaltiger Ausgasungen in Polyphenylensulfid nach Anspruch 8, dadurch gekennzeichnet, daß kondensationsfähige, resonanzfähige aromatische Ketone, Amine, Imide in Form von Oligomeren in einer Konzentration bis ca. 5 %, vorzugsweise bis ca. 1 %, Massenanteil, entweder den Ausgangsstoffen oder während des Röstprozesses zugemischt werden.

10. Verfahren zur Reduzierung schwefelhaltiger Ausgasungen in Polyphenylensulfid, dadurch gekennzeichnet, daß niedermolekulare Substanzen mit Siedepunkten von über 300°C zugesetzt werden, die aromatische, resonanzfähige Ketone und aromatische, resonanzfähige Amine sind.

**Patentansprüche**

(für die Vertragsstaaten FR und GB)

1. Verfahren zur Reduzierung schwefelhaltiger Ausgasungen in Polyphenylensulfid, dadurch gekennzeichnet, daß diesem Polymer ein thermisch etwa gleich stabiles Polymer mit aromatischen Amin-Gruppen, insbesondere Polyvinylcarbazol, in einer Konzentration bis ca. 5 %, vorzugsweise ca. 1 %, Massenanteil, zugesetzt wird.

2. Verfahren nach Anspruch 1, dadurch gekennzeichnet, daß dieses Polymer ein Polyimid in einer Konzentration bis ca. 5 %, vorzugsweise ca. 1 %, Massenanteil ist.

3. Verfahren zur Reduzierung schwefelhaltiger Ausgasungen in Polyphenylensulfid, dadurch gekennzeichnet, daß diesem Polymer ein thermisch etwa gleich stabiles Polymer mit Ketogruppen in einer Konzentration von weniger als 2 % Massenanteil zugesetzt wird.

4. Verfahren nach Anspruch 3, dadurch gekennzeichnet, daß dieses Polymer ein aromatisches Keton, insbesondere ein Polyetheretherketon (Poly-1,4-oxyphenyloxy-p,p'-benzophenon in einer Konzentration von weniger als 2 %, Massenanteil ist.

5. Verfahren zur Reduzierung schwefelhaltiger Ausgasungen in Polysulfonen, dadurch gekennzeichnet, daß den Polysulfonen ein Polymer entsprechend den Ansprüchen 1 und 2 in einer Konzentration bis ca. 1 % Massenanteil zugesetzt wird.

6. Verfahren zur Reduzierung schwefelhaltiger Ausgasungen in Polyphenylensulfid nach den Ansprüchen 1 bis 5, dadurch gekennzeichnet, daß kondensationsfähige, resonanzfähige aromatische Ketone, Amine, Imide in Form von reaktiven Monomeren in einer Konzentration bis ca. 5 %, vorzugsweise bis ca. 1 %, Massenanteil insbesondere während des Herstellungsprozesses von PPS den Ausgangsstoffen zugemischt werden.

7. Verfahren zur Reduzierung schwefelhaltiger Ausgasungen in Polyphenylensulfid nach Anspruch 6, dadurch gekennzeichnet, daß kondensationsfähige, resonanzfähige aromatische Ketone, Amine, Imide in Form von Oligomeren in einer Konzentration bis ca. 5 %, vorzugsweise bis ca. 1 %, Massenanteil entweder den Ausgangsstoffen oder während des Röstprozesses zugemischt werden.

8. Verfahren zur Reduzierung schwefelhaltiger Ausgasungen in Polyphenylensulfid, dadurch gekennzeichnet, daß niedermolekulare Substanzen mit Siedepunkten von über 300°C zugesetzt werden, die aromatische, resonanzfähige Ketone und aromatische, resonanzfähige Amine sind.

## Claims

FOR THE CONTRACTING STATES: AT, BE, CH, IT, LI, LU, NL.

1. A process for reducing emissions of sulphur-containing gas in polyphenylene sulphide, characterised in that to this polymer, a polymer is added which is of approximately equal thermal stability and contains amine groups.

2. A process for reducing emissions of sulphur-containing gas as claimed in Claim 1, characterised in that this polymer is an aromatic amine, in particular polyvinyl carbazole, in a concentration of up to about 5 % preferably up to about 1 % by weight.

3. A process for reducing emissions of sulphur-containing gas as claimed in Claim 1, characterised in that this polymer is a polyimide in a concentration of up to about 5 %, preferably about 1 % by weight.

4. A process for reducing emissions of sulphur-containing gas as claimed in Claim 1, characterised in that this polymer is a polyamide (for example polyamide 6.6) in a concentration of up to about 5 %, preferably up to about 1 % by weight.

5. A process for reducing emissions of sulphur-containing gas in polyphenylene sulphide, characterised in that to this polymer is added a polymer which is of approximately equal thermal stability and which contains ketone-groups in a concentration of less than 2 % by weight.

6. A process for reducing emissions of sulphur-containing gas as claimed in Claim 5, characterised in that this polymer is an aromatic ketone, in particular a polyether ether ketone (poly-1.4-oxyphenyloxy-p,p'-benzophenone) in a concentration of less than 2 % by weight.

7. A process for reducing emissions of sulphur-containing gas in polysulphones, characterised in that a polymer according to Claims 3 and 4 is added to the polysulphones in a concentration of up to about 1 % by weight.

8. A process for reducing emissions of sulphur-containing gas in polyphenylene sulphide as claimed in Claims 1 to 6, characterised in that aromatic ketones, amines and imides which are capable of condensation and are capable of resonance are added in the form of reactive monomers to the starting materials in a concentration of up to about 5 %, preferably up to about 1 % by weight, in particular during the production of PPS.

9. A process for reducing emissions of sulphur-containing gas in polyphenylene sulphide as claimed in Claim 8, characterised in that aromatic ketones, amines and imides which are capable of condensation and capable of resonance are added in the form of oligomers, either to starting materials, or during the roasting process, in a concentration of up to about 5 %, preferably up to about 1 % by weight.

10. A process for reducing emissions of sulphur-containing gas in polyphenylene sulphide, characterised in that low-molecular substances having boiling points of above 300°C are added, which consist of aromatic ketones capable of resonance, and aromatic amines capable of resonance.

## Claims

for the Contracting states: FR, GB.

1. A process for reducing emissions of sulphur-containing gas in polyphenylene sulphide, characterised in that to this polymer, a polymer is added which is of approximately equal thermal stability and contains aromatic amine groups, particularly but not exclusively, polyvinyl carbazole, in a concentration of up to about 5 %, preferably about 1 %, by weight.

2. A process as claimed in Claim 1, characterised in that this polymer is a polyimide, in a concentration of up to about 5 %, preferably about 1 %, by weight.

3. A process for reducing emissions of sulphur-containing gas in polyphenylene sulphide, characterised in that to this polymer, a polymer is added of approximately equal thermal stability which contains ketone-groups, in a concentration of less than 2 % by weight.

4. A process as claimed in Claim 3, characterised in that this polymer is an aromatic ketone, particularly but not exclusively, a polyether ether ketone (poly-1,4-oxyphenyloxy-p,p'-benzophenone) in a concentration of less than 2 % by weight.

5. A process for reducing emissions of sulphur-containing gas in polysulphones, characterised in that a polymer according to Claims 1 and 2 is added to the polysulphones in a concentration of up to about 1 % by weight.

6. A process for reducing emissions of sulphur-containing gas in polyphenylene sulphide as claimed in Claims 1 to 5, characterised in that aromatic ketones, amines, and imides which are capable of condensation and are capable of resonance are added in the form of reactive monomers to the starting materials in a concentration of up to about 5 %, preferably up to about 1 %, by weight, particularly but not exclusively during the production of PPS.

7. A process for reducing emissions of sulphur-containing gas in polyphenylene sulphide as claimed in Claim 6, characterised in that aromatic ketones, amines and imides capable of condensation and of resonance are

added in the form of oligomers, either to the starting materials, or during the roasting process, in a concentration of up to about 5 %, preferably up to about 1 %, by weight.

8. A process for reducing emissions of sulphur-containing gas in polyphenylene sulphide, characterised in that low-molecular substances having boiling points of above 300°C are added which consist of aromatic ketones capable of resonance and aromatic amines capable of resonance.

**Revendications**

pour les états contractants: AT, BE, CH, IT, LI, LU, NL.

1. Procédé de réduction des dégagements gazeux soufrés du poly(sulfure de phénylène), caractérisé en ce qu'il consiste à ajouter à ce polymère un polymère ayant sensiblement la même stabilité à la chaleur et ayant des groupes aminés.

2. Procédé de réduction des dégagements gazeux soufrés suivant la revendication 1, caractérisé en ce que ce polymère est une amine aromatique, notamment du polyvinyl-carbazole, en une concentration pondérale allant jusqu'à 5 % environ et de préférence jusqu'à 1 % environ.

3. Procédé de réduction des dégagements gazeux soufrés suivant la revendication 1, caractérisé en ce que ce polymère est un polyimide en une concentration pondérale allant jusqu'à 5 % environ et de préférence jusqu'à 1 % environ.

4. Procédé de réduction des dégagements gazeux soufrés suivant la revendication 1, caractérisé en ce que ce polymère est un polyamide (par exemple du polyamide 6,6) en une concentration pondérale allant jusqu'à 5 % environ et de préférence jusqu'à 1 % environ.

5. Procédé de réduction des dégagements gazeux soufrés du poly(sulfure de phénylène), caractérisé en ce qu'il consiste à ajouter à ce polymère un polymère ayant sensiblement la même stabilité à la chaleur et ayant des groupes cétone en une concentration inférieure à 2 %.

6. Procédé de réduction des dégagements gazeux soufrés suivant la revendication 5, caractérisé en ce que ce polymère est une cétone aromatique, notamment une polyétheréthercétone (poly-1,4-oxyphényloxy-p,p'-benzophénone) en une concentration pondérale inférieure à 2 %.

7. Procédé de réduction des dégagements gazeux soufrés des polysulfones, caractérisé en ce qu'il consiste à ajouter aux polysulfones un polymère suivant les revendications 3 et 4 en une concentration pondérale allant jusqu'à 1 % environ.

8. Procédé de réduction des dégagements gazeux soufrés du poly(sulfure de phénylène) suivant les revendications 1 à 6, caractérisé en ce qu'il consiste à ajouter aux matières de départ, notamment pendant le processus de préparation du PPS, des cétones, des amines, des imides aromatiques, susceptibles d'être condensés et susceptibles d'avoir des états de résonance, sous forme de monomères réactifs en une concentration pondérale allant jusqu'à 5 % en poids environ et de préférence allant jusqu'à 1 % en poids environ.

9. Procédé de réduction des dégagements gazeux soufrés du poly(sulfure de phénylène) suivant la revendication 8, caractérisé en ce qu'il consiste à ajouter aux matières de départ ou pendant le processus de grillage, des cétones, des amines, des imides aromatiques, susceptibles d'être condensés et susceptibles d'avoir des états de résonance, sous forme d'oligomères, en une concentration pondérale allant jusqu'à 5 % en poids et de préférence allant jusqu'à 1 % en poids.

10. Procédé de réduction des dégagements gazeux soufrés du poly(sulfure de phénylène), caractérisé en ce qu'il consiste à ajouter des substances à bas poids moléculaire, ayant des points d'ébullition supérieurs à 300°C, qui sont des cétones aromatiques susceptibles d'avoir des états de résonance et des amines aromatiques susceptibles d'avoir des états de résonance.

**Revendications**

pour les états contractants: FR, GB

1. Procédé de réduction des dégagements gazeux soufrés du poly(sulfure de phénylène), caractérisé en ce qu'il consiste à ajouter à ce polymère un polymère ayant sensiblement la même stabilité à la chaleur et ayant des groupes amine aromatique, notamment du polyvinylcarbazole, en une concentration pondérale allant jusqu'à 5 % en poids environ et de préférence allant jusqu'à 1 % en poids environ.

2. Procédé suivant la revendication 1, caractérisé en ce que ce polymère est un polyimide en une concentration pondérale allant jusqu'à 5 % en poids environ et de préférence jusqu'à 1 % en poids environ.

3. Procédé de réduction des dégagements gazeux soufrés du poly(sulfure de phénylène), caractérisé en ce qu'il consiste à ajouter à ce polymère un polymère ayant sensiblement la même stabilité à la chaleur et ayant des groupes cétone en une concentration inférieure à 2 %.

4. Procédé suivant la revendication 3, caractérisé en ce que ce polymère est une cétone aromatique,

notamment une polyétheréthercétone (poly-1,4-oxyphényloxy-p,p'-benzophénone) en une concentration pondérale inférieure à 2 %.

5. Procédé de réduction des dégagements gazeux soufrés des polysulfones, caractérisé en ce qu'il consiste à ajouter aux polysulfones un polymère correspondant aux revendications 1 et 2 en une concentration pondérale allant jusqu'à 1 % environ.

6. Procédé de réduction des dégagements gazeux soufrés du poly(sulfure de phénylène) suivant les revendications 1 à 5, caractérisé en ce qu'il consiste à ajouter aux matières de départ, notamment pendant le processus de préparation du PPS, des cétones, des amines, des imides aromatiques susceptibles d'être condensés et susceptibles d'avoir des états de résonance, sous forme de monomères réactifs, en une concentration pondérale allant jusqu'à 5 % en poids environ et de préférence allant jusqu'à 1 % en poids environ.

7. Procédé de réduction des dégagements gazeux soufrés du poly(sulfure de phénylène) suivant la revendication 6, caractérisé en ce qu'il consiste à ajouter aux matières de départ ou pendant le processus de grillage, des cétones, des amines, des imides aromatiques susceptibles d'être condensés et susceptibles d'avoir des états de résonance, sous forme d'oligomères, en une concentration pondérale allant jusqu'à 5 % en poids et de préférence allant jusqu'à 1 % en poids.

8. Procédé de réduction des dégagements gazeux soufrés du poly(sulfure de phénylène), caractérisé en ce qu'il consiste à ajouter des substances à bas poids moléculaire ayant des points d'ébullition supérieurs à 300°C, qui sont des cétones aromatiques susceptibles d'avoir des états de résonance et des amines aromatiques susceptibles d'avoir des états de résonance.